# FASCICULE DE BREVET EUROPEEN

(11) **EP 3 812 945 B1**
(45) Date de publication et mention de la délivrance du brevet: **14.09.2022**
(21) Numéro de dépôt: 20204182.8
(22) Date de dépôt: 27.10.2020
(51) Int. Cl.: G06F 21/64, G06Q 20/38, H04L 9/32, H04W 12/08, G06Q 20/02, G07F 17/40, H04W 12/084, H04L 9/08, H04L 9/14

(54) **SYSTÈME OUVERT ET SÉCURISÉ DE TRAITEMENT DE DEMANDE DE SIGNATURE ÉLECTRONIQUE ET PROCÉDÉ ASSOCIÉ**
OFFENES UND GESICHERTES SYSTEM ZUR VERARBEITUNG EINER ANFORDERUNG EINER ELEKTRONISCHEN SIGNATUR, UND ENTSPRECHENDES VERFAHREN
OPEN AND SECURE SYSTEM FOR PROCESSING ELECTRONIC SIGNATURE REQUEST AND ASSOCIATED METHOD

(30) Priorité: 27.10.2019 FR 1912020
(43) Date de publication de la demande: 28.04.2021
(73) Titulaire: Lex Persona, 10430 Rosières-près-Troyes (FR)
(72) Inventeur: DEVORET, François, 10120 Saint Andrè-Les-Vergers (FR); SCHWEBLIN, Benoit, 78250 Hardricourt (FR); PASQUIER, Julien, 00000 MARAKECH (MA)
(74) Mandataire: Derrien, Murielle

(56) Documents cités:
- WO-A1-2017/149453
- US-A1- 2013 318 354
- US-A1- 2019 007 218
- US-B2- 9 350 555
- CAMPBELL S: "Supporting digital signatures in mobile environments", ENABLING TECHNOLOGIES: INFRASTRUCTURE FOR COLLABORATIVE ENTERPRISES, 2 003. WET ICE 2003. PROCEEDINGS. TWELFTH IEEE INTERNATIONAL WORKSHOPS O N JUN 9-11, 2003, PISCATAWAY, NJ, USA,IEEE, 9 juin 2003 (2003-06-09), pages 238-242, XP010657912, ISBN: 978-0-7695-1963-0
- NAIK NITIN ET AL: "Securing digital identities in the cloud by selecting an apposite Federated Identity Management from SAML, OAuth and OpenID Connect", 2017 11TH INTERNATIONAL CONFERENCE ON RESEARCH CHALLENGES IN INFORMATION SCIENCE (RCIS), IEEE, 10 mai 2017 (2017-05-10), pages 163-174, XP033107752, DOI: 10.1109/RCIS.2017.7956534 [extrait le 2017-06-23]

## Description

### Domaine technique

L'invention se rapporte au domaine de la signature électronique. Plus particulièrement, l'invention concerne un système ouvert et sécurisé pour traiter des demandes de signatures de documents électronique. L'invention concerne en outre un procédé d'élaboration et de traitement d'une demande de signature.

### Technique antérieure

La signature électronique consiste principalement à permettre à un utilisateur humain de chiffrer l'empreinte d'un document à signer, avec une clé privée correspondant à une clé publique associée à son identité, cette clé privée étant généralement protégée par un dispositif cryptographique et un code secret, le résultat du chiffrement devant ensuite être incorporé ou associé au document à signer de manière à constituer une preuve. Au cours de cette opération, il est nécessaire de s'assurer que l'association entre la clé publique et l'identité du signataire soit certifiée par une autorité compatible avec les exigences de sécurité et de confiance associée à la signature électronique, que cette certification soit vérifiée comme étant toujours valide, et que le signataire soit bien d'accord avec le contenu à signer.

Par ailleurs, l'enchaînement des tâches de calcul, de gestion et de vérifications nécessaires à la réalisation d'une signature électronique est excessivement complexe. En effet, les algorithmes sur lesquels s'appuient les calculs doivent eux-mêmes être compatibles avec les exigences de sécurité et de confiance. De plus, les données à signer ne sont pas forcément accessibles directement par le processus de signature mais peuvent être distantes, et ces mêmes données à signer doivent pouvoir être encadrées par des éléments de contexte comme la date et l'heure de la signature, la chaîne de certification du signataire, son rôle, un lieu de signature, une politique de signature, etc. Par ailleurs, la clé privée peut être sur un dispositif cryptographique local ou distant de l'utilisateur, et l'environnement même de ces opérations est tantôt sur le poste de travail de l'utilisateur, mais peut être également distant ou s'exécuter en mode client-serveur dans un navigateur Web, ou encore sur un smartphone ou une tablette.

Document EP 1393144 B1 divulgue un procédé et un système basé sur le Web permettant la signature juridiquement exécutoire de documents dans un environnement Web. Le système comprend un premier moyen d'accès pour accéder à l'environnement Web depuis un système électronique, et comprend également une pluralité de modules. Un module de rendu du document pour présenter à l'utilisateur une représentation Web du document, un module d'information juridique pour présenter à l'utilisateur, dans l'environnement Web, de l'information juridique relative à la signature électronique du document, et pour obtenir l'accord de l'utilisateur de cette information juridique. Un module d'approbation des documents pour intégrer la signature de l'utilisateur au document, avec l'accord de l'utilisateur de l'information juridique. Le système comprend également un module de journalisation pour générer un journal des processus de la signature du document en associant ce journal de processus avec le document signé. Enfin, un module de distribution de document pour rendre le document signé disponible. Ce document concerne la traçabilité du processus. Il y a un besoin particulier de rationaliser le processus de signature électronique et aussi de masquer la complexité du processus aux utilisateurs.

Document EP 3423982 A1 (demandeur Lex persona) divulgue un système ouvert et sécurisé de signature électronique comprenant une application métier qui effectue une demande de signature d'un document auprès d'un gestionnaire de signature pour un utilisateur. L'application métier définit le cahier des charges de la ou des signatures, par exemple le contenu à signer, la sélection d'un utilisateur signataire, d'un format de signature, etc... Le gestionnaire de signature coordonne la demande de signature et sert d'intermédiaire entre l'application métier et l'utilisateur en vérifiant l'habilitation de l'application métier, l'identité de l'utilisateur signataire ; en récupérant le document à signer, en préparant la demande de signature avec les calculs d'empreintes des données à signer, l'envoi d'une notification de la demande de signature à des services de signatures de l'utilisateur. L'utilisateur, au moyen des services de signatures, peut contrôler l'exécution du processus de signature en activant la clé privée correspondant à un certificat de l'utilisateur répondant aux critères de sélection envoyés au gestionnaire de signature par l'application métier en vue du chiffrement de l'empreinte des données à signer. Dans ce document, le processus de signature électronique est décomposé en tâches indépendantes dont les interactions entre elles sont sécurisées. Ce document montre une rationalisation du processus de signature électronique et masque la complexité aux utilisateurs de la signature électronique et aux applications métiers qui souhaitent la mettre en œuvre.

Le but de la présente invention est de permettre la création à la volée d'un certificat de signature sur le poste même du signataire et de signer un document. La présente invention simplifie considérablement la problématique de signature à distance et notamment la contrainte de prouver le contrôle de la clé privée par son titulaire, mais aussi la problématique de la sécurisation de cette clé privée gérée de manière centralisée ou bien la confidentialité des informations signées.

Un autre but de l'invention est d'améliorer le niveau de sécurité de la transaction de signature et de permettre une identité substantielle ou renforcée mais aussi la génération d'un identifiant de la transaction de la signature permettant ainsi de générer à la volée une identité numérique spécifiquement créée pour une transaction particulière.

### Résumé de l'invention

La présente invention à pour but de simplifier la problématique de signature électronique d'un document à distance, de sécuriser la gestion des clés privées et aussi d'améliorer davantage le niveau de sécurité ainsi que la confidentialité des informations qui sont signées. Pour ce faire, il est proposé un système ouvert et sécurisé de traitement de demande de signature électronique de documents comprenant une application métier, chargée de créer une demande de signature d'au moins un document pour un utilisateur signataire, ladite application métier étant hébergée par une entité demandeur, le système est caractérisé en ce qu'il permet de signer des documents avec un certificat serveur créé à la volée et en ce qu'il comprend en outre trois services indépendants, un service gestionnaire de demande qui héberge les demandes de signatures et les documents joints; une page de consentement, constitué d'une application HTML, étant apte à gérer le protocole de consentement en s'interfaçant avec un service sécurisé d'identification de l'utilisateur et en générant une paire de clés client, KcliPub et KcliPriv, dans le navigateur web du signataire, et un service gestionnaire de preuve, hébergé par un fournisseur de signature, collectant les preuves de signature et comprenant un composant serveur hébergeant la clé cryptographique du signataire, ledit service gestionnaire de preuve étant apte à récupérer un certificat auprès d'une autorité de certification, à générer une paire de clés serveur, KservPub, KservPriv à dériver une clé secrète Ks en utilisant la clé publique du client et la clé privée du serveur, et à générer une clé publique KPub et une clé privée (KPriv) du signataire, la clé secrète Ks étant utilisée pour envelopper la clé privée du signataire.

Selon des caractéristiques particulières, le service gestionnaire de demandes est protégé par une clé API de telle sorte que seule l'application métier est apte à lui faire des demandes de signature et en ce que ledit service gestionnaire de demandes étant apte à générer une requête pour la demande de signature, puis à générer un identifiant aléatoire unique pour un ou plusieurs documents de la demande de signature et à calculer le hash du ou desdits documents, à calculer le hash de ladite requête de demande de signature, à créer un jeton de la demande, avec une durée de vie limitée, à utiliser une phrase secrète, partagée avec le gestionnaire de preuve, pour signer ledit jeton de la demande, puis modifier le statut de la demande de signature en 'démarré' et renvoyer le jeton signé de la demande à l'application métier.

Selon des caractéristiques particulières, la page de consentement est généré sur le navigateur de l'utilisateur, à la demande de l'application métier qui transmet le jeton de la demande via le service de demande de signature, ladite page de consentement génère une paire de clé client (kcliPriv et kcliPub) puis s'interface avec le service d'identification de l'utilisateur, via un nouvel onglet sur le navigateur, une fois l'utilisateur authentifié par le fournisseur d'identité, celui-ci transmet un code à l'utilisateur, le gestionnaire de preuve demande ensuite au fournisseur d'identité un jeton d'identification en échange du code, selon le protocole Openld Connect.

Selon des caractéristiques particulières, la page de consentement est servie par le service gestionnaire de preuve, de telle sorte que le gestionnaire de preuve renvoie la chaîne de certificat et la clé publique du serveur à savoir KservPub à la page de consentement, ladite page de consentement en utilisant la clé privé du client (Kclipriv) et la clé publique du serveur (KservPub) est apte à dériver la clé secrète Ks, le signataire étant le seul à disposer de ladite clé secrète Ks, nécessaire pour décomposer sa clé privée, Kpriv, via ladite page de consentement qui s'exécute dans son navigateur web.

Selon des caractéristiques particulières, le gestionnaire de preuve est apte à valider le jeton de la demande, à générer un ID de preuve et à créer un fichier de preuves, l'ID de preuve étant dérivé du jeton de demande de telle sorte que la création de preuves ne puisse pas être rejouée.

Selon des caractéristiques particulières, le service d'identification avec lequel s'interface la page de consentement est telle qu'il permet d'obtenir une identité substantielle ou renforcée de l'utilisateur et de créer un certificat qualifié.

Selon des caractéristiques particulières, la page de consentement est apte à récupérer la demande de signature et la liste des documents à signer du gestionnaire de demandes, la page de consentement présentant les documents au signataire, lui permettant de les lire avant de les signer.

Selon des caractéristiques particulières, le gestionnaire de demandes est apte à générer la valeur des documents à signer, DTBS, et à envoyer à la page de consentement en y attachant un code d'authentification, HMAC, ladite page de consentement est apte à envoyer les HMAC et la clé secrète Ks, et que le gestionnaire de preuve étant apte à valider les HMAC et décompresser la clé privée KPriv du signataire à l'aide de la clé secrète Ks, ledit gestionnaire de preuve signe ensuite les valeurs DTBS, avec la clé privé KPriv du signataire et ajoute les valeurs DTBS et la signature au fichier de preuves.

Selon des caractéristiques particulières, le fichier de preuves est exporté au format XML, ledit fichier étant signé par un certificat de sécurité et est envoyé à la page de consentement qui le transfert au gestionnaire de demandes pour la validation et le stockage dudit fichier de preuves.

Selon des caractéristiques particulières, le gestionnaire de demandes après avoir reçu le fichier de preuves au format XML, est apte à produire les documents signés de manière asynchrone et à informer l'application métier de ces documents, l'application métier étant apte à récupérer les documents signés et le fichier de preuves XML à l'aide d'une clé API, après avoir archivés le fichier XML et les documents signés, l'application métier étant apte à transmettre les documents signés au signataire.

Selon des caractéristiques particulières, le système comprend en outre une application native qui accède à la clé cryptographique du signataire, ladite application native pouvant s'exécuter sur l'ordinateur du signataire ou sur son smartphone, et permettant audit signataire de signer des documents avec son propre certificat en utilisant soit son ordinateur, soit une application mobile s'il souhaite signer sur son smartphone.

Selon des caractéristiques particulières, la page de consentement après avoir récupéré les documents à signer sur le gestionnaire de demandes et après avoir obtenu le consentement du signataire est apte à ouvrir l'application native soit sur l'ordinateur soit sur le smartphone du signataire, ladite application native étant apte à demander au signataire de choisir un certificat de signature, à récupérer le DTBS des documents à signer sur le gestionnaire de demandes, à envoyer le DTBS signé au gestionnaire de preuves, demander de produire le fichier de preuves, et à transférer le fichier de preuves au gestionnaire de demandes pour générer les documents signés de manière asynchrone.
1. L'invention concerne également un procédé d'élaboration et de traitement d'une demande de signature mis en œuvre dans le système ci-dessus, comprenant une application métier pour effectuer une demande de signature, un service de gestionnaire de demandes qui prend en compte la demande de signature depuis l'application métier, une page de consentement pour gérer le protocole de consentement, et un service gestionnaire de preuves pour générer et mettre à jour un fichier de preuves, le procédé étant caractérisé en ce qu'il permet la signature d'un ou plusieurs documents avec un certificat serveur et en ce qu'il comprend les étapes suivantes : - lancement de l'application métier par un utilisateur pour signer un document ; - lancement de la demande de signature par l'application métier auprès du gestionnaire de demandes puis transfère du ou des documents à signer et la redirection de l'utilisateur vers la page de consentement; - identification du signataire par la page de consentement avec le fournisseur d'identité via le protocole OpenID Connect ; - récupération de la demande de signature et le ou les documents à signer par la page de consentement auprès du gestionnaire de demande ; - demande de consentement pour le ou les documents à signer par la page de consentement auprès du signataire ; - génération de la clé de signature sur le composant serveur du gestionnaire de preuve, récupération du DTBS du ou des documents à signer auprès du gestionnaire de demandes par la page de consentement ; - demande de signature de DTBS du ou des documents auprès du serveur et la production d'un fichier de preuves auprès de gestionnaire de preuve par la page de consentement ; - transfère du fichier de preuves au gestionnaire de demande pour générer les documents signés de manières asynchrone ; - redirection du signataire vers gestionnaire de demandes ; - envoie du ou des documents signés et le fichier de preuves à l'application métier ; - archivage du ou des documents signés et le fichier de preuves par l'application métier.
2. Le procédé comprend en outre les étapes suivante : - validation de jeton de demande, génération d'un ID de preuve, et la création d'un fichier de preuves par le gestionnaire de preuves ; - génération d'une paire de clés client KcliPriv, Kclipub par la page de consentement ; - création de la clé du signataire par le gestionnaire de preuves ; - génération d'une paire de clés privée et publique du serveur et l'utilisation de la clé privée du serveur et la clé publique du client pour dériver une clé secrète Ks qui enveloppe la clé privée du signataire, par le gestionnaire de preuve; - demande de certificat à l'autorité de certification et renvoie la chaine de certificat et la clé publique du serveur à la page de consentement par le gestionnaire de preuves ; - génération des valeurs DTBS de la demande et des documents par le gestionnaire de demandes ; - transmission des valeurs DTBS par la page de consentement (43) au gestionnaire de preuves ; - signature des valeurs DTBS avec la clé privée du signataire et ajout les valeurs DTBS et la signature au fichier de preuves ; - export du fichier de preuves au format XML et renvoie à la page de consentement qui le transmet ensuite au gestionnaire de demandes ; - production des documents signés et envoie desdits documents à l'application métier ; - archivage du fichier de preuves au format XML et les documents signés par l'application métier et ensuite le transfert des documents signés au signataire.
3. L'invention concerne également le procédé d'élaboration et de traitement d'une demande de signature mis en œuvre dans le système ci-dessus, et comprenant en outre une application native qui accède à une clé cryptographique du signataire. Le procédé, après la récupération des documents à signer sur le gestionnaire de demandes et après avoir obtenu le consentement du signataire, comprend les étapes suivantes : - ouverture de l'application native soit sur l'ordinateur du signataire soit sur son smartphone ; - demande de choix d'un certificat de signature par l'application native ; - récupération du DTBS des documents à signer sur le gestionnaire de demandes, puis envoi le DTBS signé au gestionnaire de preuves par l'application native; - demande de production du fichier de preuves, et le transfère du fichier de preuves au gestionnaire de demandes pour générer les documents signés de manière asynchrone ; - fermeture de l'application native et la redirection du signataire vers l'application métier; - récupération des documents signés par l'application métier; - récupération du fichier de preuves et archivage des fichiers ainsi que les documents signés par l'application métier.

### Brève description des dessins

D'autres caractéristiques, détails et avantages de l'invention ressortiront à la lecture de la description qui suit, en référence aux figures annexées, qui illustrent : [Fig.1] illustre l'architecture générale du système selon la présente invention; [Fig.2] représente un diagramme simplifié du serveur de signature avec un certificat crée à la volé selon la présente invention ; [Fig.3] illustre l'architecture du système dans le cas d'utilisation d'un jeton d'authentification et signature locale ; [Fig.4] représente un diagramme simplifié dans le cas de signature locale.

Pour plus de clarté, les éléments identiques ou similaires sont repérés par des signes de références identiques sur l'ensemble des figures.

### Description des modes de réalisation

L'architecture générale du système selon la présente invention représente d'une part, un utilisateur 30 qui doit signer un document et d'autre part l'environnement internet d'un gestionnaire de demande de signature. Un utilisateur 30 est une personne physique qui souhaite ou doit signer un ou plusieurs documents.

La distinction entre une signature effectuée à l'initiative même de l'utilisateur ou bien sollicitée par un tiers (autre utilisateur) est essentielle. En effet, l'expérience utilisateur est très différente car, dans le premier cas, celle-ci implique nécessairement une préparation liée au choix du document, à sa rédaction, à la sélection de l'identité numérique et à sa mise en place, à l'éventuelle politique de signature à appliquer, etc., alors que dans le deuxième cas, elle exige une facilité d'action particulière quant à l'accès au document et à l'identité numérique du signataire pour se focaliser sur la valeur probatoire de la transaction, en contraignant éventuellement l'utilisateur, avant de pouvoir signer, à lire l'intégralité du document, à s'authentifier pour prouver son identité numérique, etc.

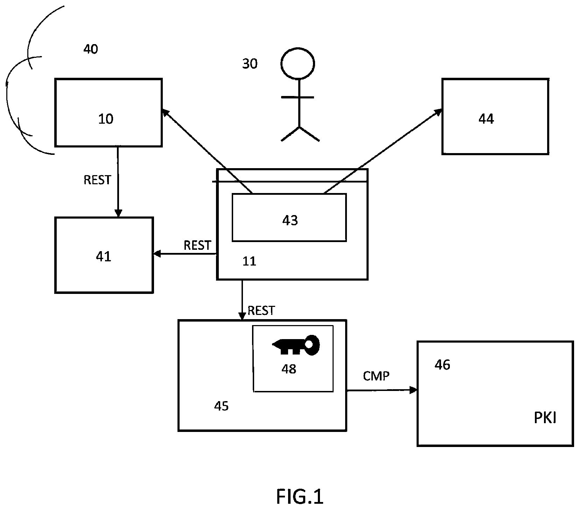

L'architecture du système telle que représentée sur la figure 1 comprend une application métier 10, ladite application métier 10 peut être développée et exécutée dans des environnements variés tels que des serveurs Web, des navigateurs Internet, dans un environnement natif PC ou Mac, ou encore depuis un téléphone portable ou une tablette. L'application métier est à l'origine du processus de signature, ainsi, toute demande de signature, qu'elle soit effectuée à l'initiative de l'utilisateur signataire 30 lui-même, ou qu'elle soit effectuée par un tiers en vue de faire signer un document, doit nécessairement passer par cette application métier 10. Ladite application métier 10 est conçue de sorte qu'elle est apte à effectuer une demande de signature d'au moins d'un document auprès d'un service gestionnaire de demandes 41, ledit gestionnaire de demandes 41 est un composant serveur qui prend en compte une demande de signature venant de ladite application métier 10 et il est hébergé par une entité demandeur 40. Le système comprend en outre deux autres services indépendants à savoir un service gestionnaire ou une page de consentement 43 et un service gestionnaire de preuves 45. La page de consentement 43 gère le protocole de consentement et est une application HTML qui pilote le signataire 30 tout au long du processus de consentement et de la création de la signature. Ce composant réside dans le navigateur Internet 11 du signataire 30. Le service gestionnaire de preuves 45 est un composant serveur qui collecte les preuves, ce composant est hébergé par le fournisseur de signature 50 (LEXPERSONA). La référence 48 est un composant serveur hébergeant la clé cryptographique du signataire 30. Ce composant est intégré au gestionnaire de preuves 45. L'autorité de certification 46 est une infrastructure de clé publique PKI qui émet le certificat de signataire, ce composant est hébergé par le fournisseur de signature 50. Le fournisseur d'identité 44 est un serveur d'autorisation conforme à Open ID Connect qui émet le jeton d'identification d'un signataire à partir duquel le certificat de signataire est dérivé. Ce composant est hébergé par un fournisseur d'enregistrement 60.

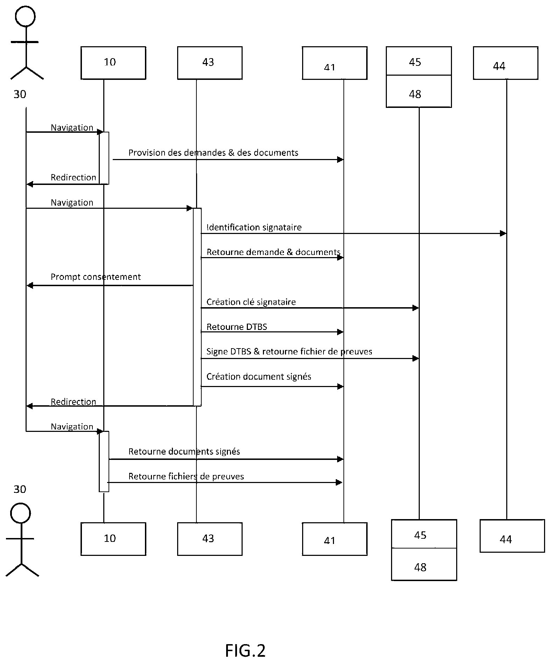

La figure 2 illustre le diagramme simplifié du processus de signature d'un document à distance. Le signataire 30 navigue avec son navigateur internet 11 sur l'application métier 10 où il doit signer certains documents. L'application métier 10 lance une demande de signature sur le gestionnaire de demandes 41 et lui transfère les documents à signer. Le service gestionnaire de demandes 41 redirige le signataire 30 vers la page de consentement 43. Ledit page de consentement 43 identifie le signataire 30 en s'interfaçant avec un fournisseur d'identité 44 à l'aide du protocole Open ID Connect. Ensuite, la page de consentement 43 récupère la demande de signature ainsi que les documents à signer sur le gestionnaire de demandes 41. La page de consentement 43 montre les documents à signer au signataire 30 en lui demandant son consentement. La page de consentement demande la génération de la clé de signataire sur le composant serveur 48 qui est intégré au composant gestionnaire de preuves 45. La page de consentement 43 récupère le DTBS des documents à signer sur le gestionnaire de demandes 41 et demande au serveur 48 de signer le DTBS et au gestionnaire de preuves 45 de produire le fichier de preuves, pour transférer au gestionnaire de demandes 41 afin que ledit gestionnaire de demandes 41 puisse générer les documents signés de manière asynchrones. Ensuite, la page de consentement 43 redirige le signataire vers l'application métier 10. Une fois les documents signés produites par le gestionnaire de demandes 41, l'application métier 10 les récupère. L'application métier 10 récupère aussi le fichier de preuves et l'archive avec les documents signés.

Nous allons décrire comment une application métier 10 fournit une demande de signature sur le gestionnaire de demandes 41. En effet, l'application métier 10 lance la création d'une demande de signature auprès du gestionnaire de demandes 41 qui est protégé par une clé API. L'application métier 10 est la seule application apte à faire une demande de signature auprès du gestionnaire de demandes 41. Il est à noter que, l'application métier 10 communique avec l'API REST du gestionnaire de demandes 41 en arrière plan afin que la clé de l'API reste secrète. Le gestionnaire de demandes 41 génère ensuite un ID de demande de signature et l'envoi à l'application métier 10, ladite application métier 10 télécharge un document à signer dans le gestionnaire de demandes 41 en transmettant l'ID de demande en tant que paramètre. De même, le gestionnaire de demandes 41 génère un ID unique du document et le renvoi à l'application métier 10. Les étapes précédentes sont répétées autant de fois qu'il y ait de document à signer. Une fois les documents téléchargés, l'application métier 10 demande au gestionnaire de demandes 41 de lancer la demande de signature.

Le gestionnaire de demandes 41 calcul le hachage de demande ainsi que les hachages des documents à partir du JSON de demande et des JSON des documents (incluant les hachages de documents). Le JSON de demande incluant un ID de demande. Le gestionnaire de demandes 41 crée également le jeton de demande contenant l'ID de demande et son hachage et utilise une phrase secrète partagée avec le gestionnaire de preuves 45 pour le signer. En suite, le gestionnaire de demandes 41 modifie le statut de la demande en démarré et renvoie le jeton de la demande à l'application métier 10. Le jeton de la demande a une durée de vie de cinq minutes. Une durée plus courte, poserait des problèmes si les horloges du gestionnaire de demandes 41 et le gestionnaire de preuves 45 ne sont pas correctement synchronisées. **Création d'une page de consentement :**

Le signataire est redirigé vers l'URL de la page de consentement 43 par l'application métier 10, en transmettant le jeton de la demande en tant que paramètre. Le gestionnaire de preuves 45, derrière l'URL de la page de consentement 43 valide le jeton de la demande, génère un ID de preuve et crée le fichier de preuves, en renvoyant une redirection HTTP avec l'ID de preuve en tant que paramètre. L'ID de preuve est dérivé du jeton de la demande afin que la création de preuve ne puisse pas être rejouée. En effet, la redirection empêche la tentative de création de preuves à chaque fois que le signataire actualise l'onglet de son navigateur. Ensuite, le signataire ouvre l'URL de la page de consentement 43 en transmettant l'ID de preuve en tant que paramètre. Le gestionnaire de preuves 45 renvoie une page HTML comprenant l'ID de la demande, le hachage de la demande, l'URL d'autorisation du fournisseur d'identité 44, les feuilles de style, etc.. à la page de consentement 43. **Récupération de l'identité du signataire et le déroulement d'autorisation Open ID Connect :**

Une fois la page de consentement 43 signifiée, le signataire 30 la charge dans son navigateur 11. Tout d'abord, la page de consentement génère une paire de clés publique et privée du client (KcliPriv et KcliPub). L'URL autorisé est ensuite renseignée avec un état contenant l'ID de preuve, un identifiant aléatoire unique pour un ou plusieurs documents et la clé publique du client. Une redirection vers le fournisseur d'identité 44 aura lieu via un bouton présenté au signataire 30. Le bouton permet également à la page d'autorisation de s'ouvrir sans aucune restriction du navigateur. Une fois le bouton cliqué, l'URL d'autorisation du fournisseur d'identité 44 est ouverte dans un nouvel onglet de navigateur 11, laissant ainsi la page de consentement 43 en arrière-plan. Le fait de garder la page de consentement 43 ouvert permet de conserver la clé privée du client (KcliPriv) dans la RAM et de limiter les risques d'attaque sur l'ordinateur du signataire 30. Une fois le signataire 30 s'est authentifié et a accordé l'autorisation d'accéder à son identité, le fournisseur d'identité 44 le redirige vers une page de rappel en lui transmettant un code. Le navigateur du signataire 30 ouvre la page de rappel en transmettant l'ID de preuve en tant que paramètre avec le code. Le gestionnaire de preuves 45 demande au fournisseur d'identité 44 d'échanger le code avec un jeton d'identification tel que spécifié par le protocole Open ID Connect. Le fournisseur d'identité 44 renvoie le jeton d'identification au gestionnaire de preuves 45. Ledit gestionnaire de preuves 45 crée le jeton de signataire à partir du jeton ID et met à jour le fichier de preuves et une page HTML est renvoyée, y compris le jeton de signataire. A noter que le jeton de signataire contient le hachage de la demande et certains éléments de base fournie par le fournisseur d'identités 44, telle que le nom du signataire, l'adresse de la messagerie et l'identificateur. Une fois ouvert par le navigateur 11 du signataire, la page de rappel envoi le jeton de signataire à la page de consentement 43, à l'aide d'un message inter-onglet. Puisque les deux pages sont sur le même domaine, il n'y a pas de restriction du navigateur. **Consentement du signataire :**

La page de consentement 43 récupère la demande de signature du gestionnaire de demandes 41 en transmettant l'ID de la demande et le jeton de signataire en tant que paramètre. Le gestionnaire de demandes 41 renvoi le JSON de la demande après avoir vérifié que le jeton de signataire contient les éléments d'identité attendus ainsi que le hachage de la demande attendu. La page de consentement 43 récupère la liste des documents du gestionnaire de demandes 41 en transmettant l'ID de la demande et le jeton de signataire en tant que paramètre. Le gestionnaire de demandes 41 renvoie les JSON des documents après avoir vérifié que le jeton de signature contient les éléments d'identité et le hachage de la demande prévu. La page de consentement 43 garantit que le hachage de la demande est cohérent avec le JSON de la demande et les JSON des documents. Pour chaque document que le signataire doit ou veut lire ou télécharger, la page de consentement 43 récupère le contenu du document en transmettant comme paramètre l'ID du document et le jeton de signataire. Le gestionnaire de demandes 41 renvoie le contenu du document après avoir vérifié que le jeton de signataire contient les éléments d'identité attendues et le hachage de demande prévu. Avant de présenter le contenu du document au signataire, la page de consentement 43 garantit que le hachage du contenu est cohérent avec le hachage contenu dans le document JSON. En suite la page de consentement 43 présente les documents au signataire 30, lui permettant de les lire. Une fois qu'il accepte, le signataire clique sur le bouton «J'accepte». **Création de la clé de signataire :**

La clé du signataire est créée et protégée par le gestionnaire de preuves 45. En effet, la page de consentement 43 demande au gestionnaire de preuves 45 de créer la clé de signataire 30, en passant l'ID de preuve, le jeton de signataire, le JSON de demande, les JSON de documents et la clé publique de client (kcliPub) en tant que paramètres. Le gestionnaire de preuves 45 s'assure que le hachage de la demande est cohérent avec le JSON de la demande et avec les JSON des documents. Le gestionnaire de preuves 45 vérifie également que le nombre aléatoire unique contenu dans le jeton d'ID produit par le fournisseur d'identité 44 correspondant au hachage du défi et à la clé publique du client (kcliPub). Ensuite, le gestionnaire de preuves 45 génère une paire de clés serveur (kservPriv et kservPub) et utilise la clé privée du serveur (kservPriv) et la clé publique du client (kcliPub) pour dériver une clé secrète (ks) avec l'algorithme Diffie-Hellman. La paire de clés (kPriv et kPub) du signataire est ensuite créée par le gestionnaire de preuves 45 avec une demande de certificat, et la clé secrète (ks) est utilisée pour envelopper la clé privée (kPriv) du signataire. Une fois que la clé du signataire a été encapsulée, la clé secrète (ks) est détruite par le gestionnaire de preuves 45. La demande de certificat est envoyée à l'autorité de certification 46. L'autorité de certification 46 renvoie le certificat au gestionnaire de preuve 45. Après avoir stocké la clé privée encapsulée et mis à jour le fichier de preuves avec le certificat de signataire, le gestionnaire de preuves 45 renvoie la chaîne de certificats et la clé publique du serveur (kservPub) à la page de consentement 43. La page de consentement 43 utilise la clé privée du client (kcliPriv) et la clé publique du serveur (kservPub) pour dériver la clé secrète (ks) avec l'algorithme Diffie-Hellman. À ce stade, le signataire 30, via la page de consentement 43 qui s'exécute dans son propre navigateur 11, est le seul à disposer de la clé secrète (ks) nécessaire pour décompresser la clé privée du signataire (kPriv) dans le gestionnaire de preuves.

Nous décrivons comment les documents DTBS sont générés par le gestionnaire de demandes 41 et comment ils sont signés par le gestionnaire de preuves 45 à l'aide de la clé du signataire 30. En effet, pour chaque document à signer, la page de consentement 43 envoie la chaîne de certificats au gestionnaire de demandes 41 avec l'ID de document et le jeton de signataire. Après avoir vérifié que le jeton de signataire contient les éléments d'identité attendus et le hachage de la demande, le gestionnaire de demandes 41 génère la valeur DTBS et la renvoie à la page de consentement 43 en y attachant un HMAC. Le HMAC est calculé à partir de la valeur DTBS et de l'ID de document à l'aide de la phrase secrète partagée avec le gestionnaire de preuves 45. Une fois que toutes les valeurs DTBS ont été générées, la page de consentement 43 les envois au gestionnaire de preuves 45 avec les HMAC et la clé secrète (ks). Le gestionnaire de preuves 45 valide les HMAC et décompresse la clé privée du signataire (kPriv) avec la clé secrète (ks). Le gestionnaire de preuves 45 signe ensuite les valeurs DTBS avec la clé privée du signataire (kPriv) et ajoute les valeurs DTBS et la signature au fichier de preuves. Le fichier de preuves est exporté au format XML, signé par le gestionnaire de preuves 45 avec un certificat de scellement et est renvoyé à la page de consentement 43. Ladite page de consentement 43 transmet le fichier de preuves XML au gestionnaire de demandes 41. Le gestionnaire de demandes 41 valide et stocke le fichier de preuves XML, modifie le statut de la demande en 'signé' et renvoie une réponse vide à la page de consentement 43.

Le gestionnaire de demandes 41 termine le traitement de la demande en produisant les documents signés en arrière-plan. En effet, après avoir reçu le fichier de preuves XML, le gestionnaire de demandes 41 lance une tâche en arrière-plan pour produire les documents signés et terminer le traitement de la demande. Pendant ce temps, la page de consentement 43 redirige le signataire 30 vers l'URL de rappel de l'application métier 10. Le navigateur du signataire 30 ouvre la page de rappel de l'application métier 10. Selon le cas d'utilisation de l'application métier 10, la page de rappel peut demander au signataire 30 d'attendre pendant la préparation des documents signés ou peut l'informer que les documents signés seront disponibles ultérieurement. Une fois que le gestionnaire de demandes 41 a produit les documents signés, le statut de la demande est modifié pour être terminé. Le gestionnaire de demandes 41 informe l'application métier 10 via un Webhook. L'application métier 10 récupère les documents signés à partir du gestionnaire de demandes 41 à l'aide de sa clé API. Le gestionnaire de demandes 41 renvoi le fichier de preuves XML à l'application métier 10. Une fois le fichier de preuve XML et les documents signés archivés, l'application métier 10 transmet les documents signés au signataire 30.

A noter que un Webhook est une méthode permettant d'augmenter ou de modifier le comportement d'une page Web, ou d'une application Web, avec des rappels personnalisés.

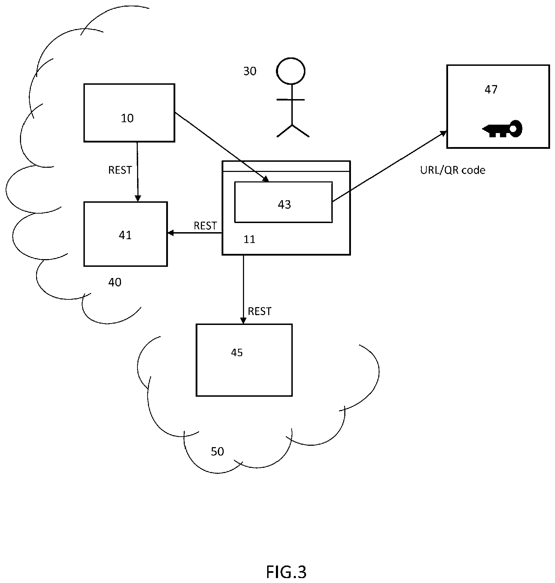

L'invention permet également à un signataire de signer des documents avec son propre certificat, un jeton cryptographique, par exemple, en utilisant une application locale s'il souhaite signer sur son ordinateur ou s'il souhaite utiliser son smartphone. Les différents composants impliqués dans la création de la signature locale sont illustrés sur la figure 3. Cette architecture comprend une application métier 10 qui est chargée de créer les demandes de signature. Ce composant est hébergé par l'entité demandeur 40. Le gestionnaire de demandes 41 est une composant du serveur qui héberge les demandes de signature et les documents joints. Ce composant est hébergé par l'entité demandeur 40. La page de consentement 43 est une application HTML qui pilote le signataire 30 tout au long du processus de consentement et de la création de la signature. Ce composant réside dans le navigateur Web 11 du signataire 30. Le gestionnaire de preuves 45 est un composant serveur qui collecte les preuves de signature. Ce composant est hébergé par le fournisseur de signature 50 (LEX PERSONA). Le système comprend en outre une application native locale 47 qui peut être installée sur un ordinateur fixe du bureau ou sur un smartphone et qui accède à la clé cryptographique du signataire pour signer les documents. Ce composant s'exécute sur l'ordinateur du signataire ou sur son smartphone.

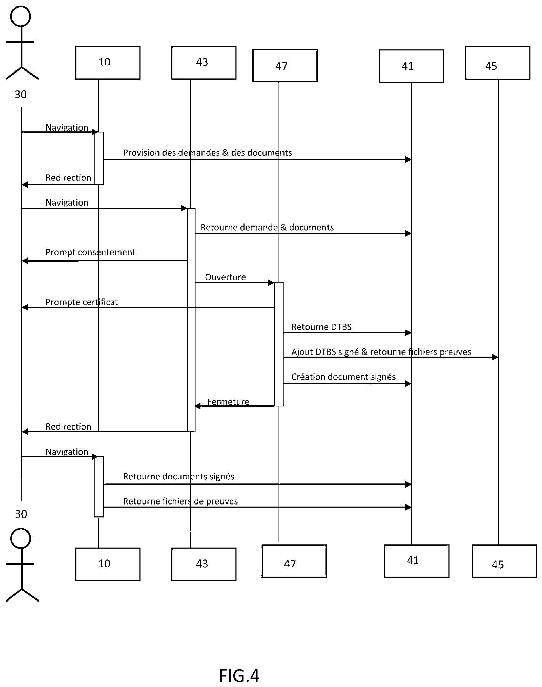

La figure 4 illustrant un flux simplifié de ce mode de signature locale. Dans ce mode de signature locale, une fois que la page de consentement 43 montre les documents au signataire 30 et demande son consentement, ledit page de consentement 43 ouvre l'application locale bureau/mobile, ladite application locale 47 bureau/mobile demande au signataire 30 de choisir un certificat de signature. L'application locale bureau/mobile récupère le DTBS des documents à signer sur le gestionnaire de demandes 41 et ensuite envoie le DTBS signé au gestionnaire de preuves 45 et lui demande de produire le fichier de preuves. Le fichier de preuves est transféré au gestionnaire de demandes 41 pour générer les documents signés de manière asynchrones. Ensuite, la page de consentement 43 redirige le signataire 30 vers l'application métier 10. Le signataire accède à l'application métier 10, et une fois que les documents signés ont été produits par le gestionnaire de demandes 41, l'application métier 10 les récupère. L'application métier 10 récupère le fichier de preuves et l'archive avec les documents signés. **Ouverture de l'application locale bureau/Mobile :**

Le signataire 30 passe de la page de consentement 43 à l'application locale 47 bureau/mobile afin de signer avec son jeton cryptographique. Dans ce mode de signature locale, la page de consentement 43 demande du signataire 30 à installer l'application locale 47 sur son bureau ou sur son smartphone ou à l'ouvrir si l'application est déjà installée en transmettant comme paramètres l'ID de demande, l'ID de preuve et un ID d'instance aléatoire. Si la page de consentement 43 est ouverte sur un navigateur Web du bureau, le signataire peut passer à application Mobile sur son smartphone à l'aide d'un code QR. Sinon, l'application locale bureau/mobile est ouverte via un URL personnalisé. Une fois ouverte, l'application locale bureau/mobile appelle le gestionnaire de demandes 41 pour définir l'ID d'instance correspondant à l'ID de demande spécifié. Le but est que la page de consentement 43 soit notifiée lorsque l'application locale 47 bureau/mobile a été ouverte. Le gestionnaire de demandes 41 renvoi le JSON de la demande. L'application locale bureau/mobile récupère la liste de documents du gestionnaire de demandes 41 en transmettant l'ID de demande en tant que paramètre. Le gestionnaire de demandes 41 renvoi les JSON des documents. Le signataire 30 est invité à choisir un certificat de signature et ensuite le signataire clique sur le bouton "Signer".

Dans ce mode de signature locale, le gestionnaire de preuves 45 renvoi la chaîne de certificats à l'application locale bureau/mobile. Pour chaque document à signer, l'application locale bureau/mobile envoie la chaîne de certificats au gestionnaire de demandes 41 avec l'ID du document. Le gestionnaire de demandes 41 génère la valeur DTBS et la renvoie à la page de consentement 43. Une fois que toutes les valeurs DTBS ont été générées, l'application locale, bureau/mobile, les signe à l'aide de la clé du signature et les envois au gestionnaire de preuves 45 avec les HMAC et les valeurs de signature. Le gestionnaire de preuves 45 valide les HMAC et les valeurs de signature, puis ajoute le DTBS et les valeurs de signature au fichier de preuves. Le fichier de preuves est exporté au format XML, signé par le gestionnaire de preuves 45 avec un certificat de scellement et renvoyé à l'application locale, bureau/mobile. La page de consentement 43 transmet le fichier de preuves XML au gestionnaire de demandes 41. Le gestionnaire de demandes 41 valide et stocke le fichier de preuves, modifie le statut de la demande en signé et renvoi une réponse vide à la page de consentement 43. Ensuite, l'application locale, bureau/mobile se ferme et ramène le signataire 30 à la page de consentement 43.

## Revendications

1. Système ouvert et sécurisé de traitement de demandes de signature électronique de documents comprenant une application métier (10), chargée de créer une demande de signature d'au moins un document pour un utilisateur signataire (30), ladite application métier (10) étant hébergée par une entité demandeur (40), le système est **caractérisé en ce qu'**il permet de signer des documents avec un certificat serveur créé à la volée et **en ce qu'**il comprend en outre un service gestionnaire de demandes (41) qui héberge les demandes de signatures et les documents joints; une page de consentement (43), générée sur le navigateur de l'utilisateur à la demande de l'application métier (10) ;et un service gestionnaire de preuves (45), hébergé par un fournisseur de signature (50), collectant les preuves de signature ; la page de consentement (43) constituée d'une application HTML, en s'interfaçant avec un service sécurisé d'identification (44) de l'utilisateur (30), via un nouvel onglet sur le navigateur, génère une paire de clé client, Kclipub, KcliPriv, une fois que l'utilisateur est authentifié par le fournisseur d'identité (44) selon le protocole OpenId Connect, et lorsqu'un jeton d'identification est obtenue à la demande de gestionnaire de preuves (45) auprès de fournisseur d'identité (44) en échange d'un code envoyé par ledit fournisseur d'identité (44) à l'utilisateur (30), le gestionnaire de preuve (45) est apte à valider le jeton d'identification, à générer un ID de preuve et à créer un fichier de preuve, l'ID de preuve étant dérivé du jeton d'identification de sorte que la création de preuve ne puisse pas être rejouée; ledit service gestionnaire de preuves (45) comprend en outre un composant serveur hébergeant la clé cryptographique du signataire (30), et étant apte à générer une paire de clés serveur, KservPriv et KservPub, à dériver une clé secrète Ks en utilisant la clé publique du client,Kclipub et la clé privée du serveur,KservPriv, à générer une clé publique KPub et une clé privée, KPriv du signataire (30), à créer une demande de certificat, à récupérer un certificat auprès d'une autorité de certification (46) ; que la clé secrète Ks étant utilisée pour envelopper la clé privée du signataire en renvoyant la chaîne de certificat et la clé publique du serveur, KservPub à la page de consentement (43), ladite page de consentement en utilisant la clé privé du client Kclipriv, et la clé publique du serveur, KservPub est apte à dériver la clé secrète Ks, et que le signataire (30) est le seul à disposer de ladite clé secrète Ks, nécessaire pour décomposer sa clé privée Kpriv via ladite page de consentement (43) qui s'exécute dans son navigateur web, le gestionnaire de preuves (45) est en mesure d'utiliser la clé privée, KPriv du signataire, décompressé à l'aide de la clé secrète ks et généré à l'aide de gestionnaire de demande (41), pour signer la valeur DTBS et d'ajouter les valeurs DTBS et la signature au fichier de preuves afin de créer une preuve de signature à stocker ; le gestionnaire de demandes (41), après avoir reçu le fichier de preuve au format XML, est apte à produire les documents signés et à informer l'application métier (10) de ces documents, l'application métier (10) étant apte à récupérer les documents signés et le fichier de preuve XML à l'aide d'une clé API, et après avoir archivés le fichier XML et les documents signés, l'application métier (10) étant apte à transmettre les documents signés au signataire (30)..

2. Système ouvert et sécurisé de traitement de demandes de signature électronique de documents selon la revendication 1 **caractérisé en ce que** le service gestionnaire de demandes (41) est protégé par une clé API de telle sorte que seule l'application métier (10) est apte à lui faire des demandes de signature et **en ce que** ledit service gestionnaire de demandes (41) étant apte à générer une requête pour la demande de signature, puis à générer un identifiant aléatoire unique pour un ou plusieurs documents de la demande de signature et à calculer le hash du ou desdits documents, à calculer le hash de ladite requête de demande de signature, à créer un jeton de la demande, avec une durée de vie limitée, à utiliser une phrase secrète, partagée avec le gestionnaire de preuves (45), pour signer ledit jeton de la demande, puis modifier le statut de la demande de signature en démarré et renvoyer le jeton signé de la demande à l'application métier (10).

3. Système ouvert et sécurisé de traitement de demandes de signature électronique de documents selon la revendication 1 **caractérisé en ce que** le service d'identification (44) avec lequel s'interface la page de consentement (43) est de telle sorte qu'il permet d'obtenir une identité substantielle ou renforcée de l'utilisateur (30) et de créer un certificat qualifié.

4. Système ouvert et sécurisé de traitement de demandes de signature électronique de documents selon l'une des revendications précédente, **caractérisé en ce que** la page de consentement (43) est apte à récupérer la demande de signature et la liste des documents à signer du gestionnaire de demandes (41), la page de consentement présentant les documents au signataire (30), lui permettant de les lire avant de les signer.

5. Système ouvert et sécurisé de traitement de demandes de signature électronique de documents selon la revendication 1 dans lequel le fichier de preuves est exporté au format XML, ledit fichier étant signé par un certificat de sécurité et envoyé à la page de consentement (43) qui le transfert au gestionnaire de demandes (41) pour la validation et le stockage dudit fichier de preuves.

6. Système ouvert et sécurisé de traitement de demandes de signature électronique de documents selon la revendication 1 **caractérisé en ce que** le système comprend en outre une application native (47) qui accède à la clé cryptographique du signataire (30), ladite application native (47) pouvant s'exécuter soit sur l'ordinateur du signataire (30) soit sur son smartphone, et permettant audit signataire (30) de signer des documents avec son propre certificat en utilisant soit son ordinateur, soit une application mobile s'il souhaite signer sur son smartphone.

7. Système ouvert et sécurisé de traitement de demandes de signature électronique de documents selon la revendication 1, **caractérisé en ce que**, la page de consentement (43) après avoir récupéré les documents à signer sur le gestionnaire de demandes (41) et après avoir obtenu le consentement du signataire (30) est apte à ouvrir l'application native (47) soit sur l'ordinateur bureau ou sur le smartphone du signataire (30), ladite application native (47) étant apte à demander au signataire (30) de choisir un certificat de signature, à récupérer le DTBS des documents à signer sur le gestionnaire de documents (41), à envoyer le DTBS signé au gestionnaire de preuves (45), demander de produire le fichier de preuves, et à transférer le fichier de preuves au gestionnaire de demandes (41) pour générer les documents signés de manière asynchrone.

8. Procédé d'élaboration et de traitement de demandes de signature mis en oeuvre dans le système des revendication 1 à 7 **caractérisé en ce qu'**il comprend les étapes suivantes :
- validation de jeton de demande, génération d'un ID de preuve, et la création d'un fichier de preuves par le gestionnaire de preuves (45), hébérgé par un fournisseur de signature (50), collectant les preuves de signature; ;
- génération d'une paire de clés client KcliPriv, Kclipub par la page de consentement (43), ladite page de consentement (43) constituée d'une application HTML en s'interfaçant avec un service sécurisé d'identification (30) via un nouvel onglet sur le navigateur et générée sur le navigateur de l'utilisateur à la demande de l'application métier (45), une fois que l'utilisateur est authentifié par le fournisseur d'identité (44) selon le protocole Openld Connect et lorsque le jeton d'identification est obtenue à la demande de gestionnaire de preuves (45), auprès de fournisseur d'identité (44) en échange d'un code envoyé par ledit fournisseur d'identité (44) de l'utilisateur (30) à l'utilisateur (30), le gestionnaire de preuve (45) valide le jeton d'identification, génère un ID de preuve et crée un fichier de preuve, l'ID de preuve étant dérivé du jeton d'identification de sorte que la création de preuve ne puisse pas être rejouée; ;
- création de la clé public KPub et de la clé privée KPriv du signataire (30) par le gestionnaire de preuves (45) ;
- génération par le gestionnaire de preuves (45)d'une paires de clés privée et publique du serveur, KservPriv et KservPub, et l'utilisation de la clé privée du serveur, KservPriv et la clé publique du client, Kclipub pour dériver une clé secrète Ks, nécessaire pour décomposer la clé privée KPriv du signataire (30) via la page de consentement (43), le gestionnaire de preuves (45) utilise la clé privée KPriv du signataire à l'aide de la clé secrète Ks qui enveloppe la clé privée du signataire (30);
- demande de certificat à l'autorité de certification et renvoie la chaine de certificat et la clé publique du serveur, KservPub, à la page de consentement (43) par le gestionnaire de preuve (45) ;
- génération des valeurs DTBS de la demande et des documents par le gestionnaire de demandes (41) ;
- transmission des valeurs DTBS par la page de consentement (43) au gestionnaire de preuves (45) ;
- signature des valeurs DTBS avec la clé privée KPriv du signataire (30) et ajout les valeurs DTBS et la signature au fichier de preuves ;
- export du fichier de preuves au format XML et renvoie à la page deconsentement (43) qui le transmet ensuite au gestionnaire de demandes (41);
- production des documents signés et envoie desdits documents à l'application métier (10) ;
- archivage du fichier de preuves au format XML et les documents signés par l'application métier (10) et ensuite le transfert des documents signés au signataire (30).

## Patentansprüche

1. Offenes und sicheres System zur Verarbeitung von Anfragen zur elektronischen Signatur von Dokumenten mit einer Geschäftsanwendung (10), die für die Erstellung einer Signaturanfrage für mindestens ein Dokument für einen unterzeichnenden Benutzer (30) verantwortlich ist, wobei die Geschäftsanwendung (10) von einer anfordernden Entität (40) gehostet wird, ist das System **dadurch gekennzeichnet, dass** es erlaubt, dass Dokumente mit einem im laufenden Betrieb erstellten Serverzertifikat signiert werden können, und dass es auch einen Anforderungsverwaltungsdienst (41) umfasst, der Signaturanforderungen und angehängte Dokumente hostet ; eine Einwilligungsseite (43), die auf Anforderung der Geschäftsanwendung (10) im Browser des Benutzers generiert wird; und einen Beweisverwaltungsdienst (45), der von einem Signaturanbieter (50) gehostet wird und die Signaturnachweise sammelt; die Zustimmungsseite (43), die aus einer HTML-Anwendung besteht, erzeugt durch Schnittstellenbildung mit einem sicheren Identifikationsdienst (44) des Benutzers (30) über eine neue Registerkarte im Browser ein Client-Schlüsselpaar, Kclipub, KcliPriv, sobald der Benutzer vom Identitätsanbieter (44) gemäß dem Openld Connect-Protokoll authentifiziert wird, und wenn ein Identifikationstoken auf Anfrage des Beweisverwalters (45) vom Identitätsanbieter (44) im Austausch gegen einen von dem Identitätsanbieter (44) gesendeten Code erhalten wird ( 44) an den Benutzer (30), der Beweismanager (45) ist in der Lage, den Identifikationstoken zu validieren, eine Beweis-ID zu erzeugen und eine Beweisdatei zu erstellen, wobei die Beweis-ID von dem Identifikationstoken abgeleitet wird, so dass die Beweiserzeugung nicht möglich ist wiedergegeben; der Nachweisverwaltungsdienst (45) ferner eine Serverkomponente umfasst, die den kryptografischen Schlüssel (30) des Unterzeichners hostet und in der Lage ist, ein Paar Serverschlüssel, KservPriv und KservPub, zu generieren, um einen geheimen Schlüssel Ks unter Verwendung des öffentlichen Schlüssels des Clients abzuleiten. Kclipub und den privaten Schlüssel des Servers, KservPriv, um einen öffentlichen Schlüssel KPub und einen privaten Schlüssel, KPriv, des Unterzeichners (30) zu erzeugen, um eine Zertifikatsanforderung zu erstellen, um ein Zertifikat von einer Zertifizierungsstelle abzurufen (46); dass der geheime Schlüssel Ks verwendet wird, um den privaten Schlüssel des Unterzeichners zu verpacken, indem die Zertifikatskette und der öffentliche Schlüssel des Servers KservPub an die Zustimmungsseite (43) zurückgegeben werden, wobei die Zustimmungsseite den privaten Schlüssel des Clients Kclipriv verwendet, und der öffentliche Schlüssel des Servers, KservPub in der Lage ist, den geheimen Schlüssel Ks abzuleiten, und dass der Unterzeichner (30) der einzige ist, der über den geheimen Schlüssel Ks verfügt, der notwendig ist, um seinen privaten Schlüssel Kpriv über die Zustimmungsseite (43) aufzuschlüsseln der in seinem Webbrowser läuft, kann der Evidence Handler (45) den privaten Schlüssel KPriv des Unterzeichners, der mit dem geheimen Schlüssel ks entpackt und mit dem Request Handler (41) generiert wurde, verwenden, um den DTBS-Wert zu signieren und hinzuzufügen DTBS-Werte und die Signatur in der Evidence-Datei zum Erstellen eines zu speichernden Signaturbeweises; der Anforderungsmanager (41) nach Erhalt der Beweisdatei im XML-Format in der Lage ist, die signierten Dokumente zu erstellen und die Geschäftsanwendung (10) über diese Dokumente zu informieren, wobei die Geschäftsanwendung (10) in der Lage ist, die signierten Dokumente wiederherzustellen und der XML-Proof-Datei unter Verwendung eines API-Schlüssels, und nachdem die XML-Datei und die signierten Dokumente archiviert wurden, kann die Geschäftsanwendung (10) die signierten Dokumente an den Unterzeichner (30) übermitteln.

2. Offenes und sicheres System zur Verarbeitung von Anfragen zur elektronischen Signatur von Dokumenten nach Anspruch 1, **dadurch gekennzeichnet, dass** der Anfrageverwaltungsdienst (41) durch einen API-Schlüssel geschützt ist, so dass nur die Geschäftsanwendung (10) dazu in der Lage ist Signaturanfragen daran zu stellen und dadurch, dass der Anfrageverwaltungsdienst (41) in der Lage ist, eine Anfrage für die Signaturanfrage zu generieren, dann eine eindeutige zufällige Kennung für ein oder mehrere Dokumente der Signaturanfrage zu generieren und den Hash des Dokuments zu berechnen (s), Berechnen des Hashs der Signaturanforderungsanforderung, Erstellen eines Tokens der Anforderung mit begrenzter Lebensdauer unter Verwendung einer geheimen Phrase, die mit dem Beweisverwalter (45) geteilt wird, um das Anforderungstoken zu signieren, dann Ändern des Status von die Signaturanforderung auf "gestartet" und das signierte Anforderungstoken an die Geschäftsanwendung zurückzugeben (10).

3. Offenes und sicheres System zur Verarbeitung von Anfragen zur elektronischen Signatur von Dokumenten nach Anspruch 1, **dadurch gekennzeichnet, dass** der Identifizierungsdienst (44), mit dem die Zustimmungsseite (43) eine Schnittstelle bildet, so beschaffen ist, dass er es ermöglicht, a wesentliche oder verstärkte Identität des Benutzers (30) und ein qualifiziertes Zertifikat zu erstellen.

4. Offenes und sicheres System zur Verarbeitung von elektronischen Signaturanforderungen für Dokumente nach einem der vorhergehenden Ansprüche, **dadurch gekennzeichnet, dass** die Zustimmungsseite (43) die Signaturanforderung und die Liste der zu signierenden Dokumente der Anforderung abrufen kann Manager (41), die Zustimmungsseite, die dem Unterzeichner (30) die Dokumente präsentiert, sodass er sie lesen kann, bevor er sie unterzeichnet.

5. Offenes und sicheres System zur Verarbeitung von Anträgen auf elektronische Signatur von Dokumenten nach Anspruch 1, bei dem die Beweisdatei im XML-Format exportiert wird, wobei die Datei mit einem Sicherheitszertifikat signiert und an die Zustimmungsseite (43) gesendet wird, die überträgt es an den Anforderungsmanager (41) zur Validierung und Speicherung der Nachweisdatei.

6. Offenes und sicheres System zum Verarbeiten von Anfragen zur elektronischen Signatur von Dokumenten nach Anspruch 1, **dadurch gekennzeichnet, dass** das System ferner eine native Anwendung (47) umfasst, die auf den kryptographischen Schlüssel des Unterzeichners (30) zugreift, wobei die Anwendung nativ ist (47), die entweder auf dem Computer (30) oder auf dem Smartphone des Unterzeichners laufen kann, und es dem Unterzeichner (30) ermöglicht, Dokumente mit seinem eigenen Zertifikat zu signieren, indem er entweder seinen Computer oder eine mobile Anwendung verwendet, die er auf seinem Smartphone signieren möchte.

7. Offenes und sicheres System zur Bearbeitung von Anfragen zur elektronischen Signatur von Dokumenten nach Anspruch 1, **dadurch gekennzeichnet, dass** die Zustimmungsseite (43) nach dem Abrufen der zu signierenden Dokumente auf dem Anfragemanager (41) und nach deren die Zustimmung des Unterzeichners (30) erhalten hat, kann die native Anwendung (47) entweder auf dem Desktop-Computer oder auf dem Smartphone des Unterzeichners (30) öffnen, wobei die native Anwendung (47) den Unterzeichner (30) fragen kann ein Signaturzertifikat auszuwählen, die DTBS der zu signierenden Dokumente auf dem Dokumentenmanager (41) abzurufen, die signierte DTBS an den Evidence Manager (45) zu senden, die Erstellung der Evidence-Datei anzufordern und die zu übertragen Evidence-Datei an den Request-Handler (41), um die signierten Dokumente asynchron zu generieren.

8. Verfahren zum Erzeugen und Verarbeiten von Signaturanforderungen, implementiert in dem System nach den Ansprüchen 1 bis 7, **dadurch gekennzeichnet, dass** es die folgenden Schritte umfasst:
- Anforderung einer Token-Validierung, Generierung einer Beweis-ID und Erstellung einer Beweisdatei durch den Beweismanager (45), der von einem Signaturanbieter (50) gehostet wird, Sammeln des Signaturnachweises;
- Generierung eines Paars von Kundenschlüsseln KcliPriv, Kclipub durch die Zustimmungsseite (43), wobei die Zustimmungsseite (43) aus einer HTML-Anwendung besteht, indem sie über eine neue Registerkarte im Browser mit einem sicheren Identifikationsdienst (30) verbunden und generiert wird den Browser des Benutzers auf Anfrage der Geschäftsanwendung (45), sobald der Benutzer vom Identitätsanbieter (44) gemäß dem Openld Connect-Protokoll authentifiziert wurde und wenn das Identifikationstoken auf Anfrage des Evidenzmanagers (45) erhalten wurde, von dem Identitätsanbieter (44) im Austausch für einen Code, der von dem Identitätsanbieter (44) des Benutzers (30) an den Benutzer (30) gesendet wird, der Beweismanager (45) das Identifikationstoken validiert, eine Beweis-ID generiert und erstellt eine Evidenzdatei, wobei die Evidenz-ID aus dem Identifizierungstoken abgeleitet wird, so dass die Erstellung von Evidenzen nicht wiederholt werden kann;
- Erstellung des öffentlichen Schlüssels KPub und des privaten Schlüssels KPriv des Unterzeichners (30) durch den Beweisverwalter (45);
- Generierung eines Paars privater und öffentlicher Schlüssel des Servers, KservPriv und KservPub, durch den Beweisverwalter (45) und die Verwendung des privaten Schlüssels des Servers, KservPriv und des öffentlichen Schlüssels des Clients, KcliPub, um einen Schlüssel abzuleiten geheimes Ks, das zum Zerlegen des privaten Schlüssels KPriv des Unterzeichners (30) über die Einwilligungsseite (43) erforderlich ist, verwendet der Beweismanager (45) den privaten Schlüssel KPriv des Unterzeichners unter Verwendung des geheimen Schlüssels Ks, der den privaten Schlüssel von umschließt Unterzeichner (30);
- Zertifikatsanforderung an die Zertifizierungsstelle und Rückgabe der Zertifikatskette und des öffentlichen Schlüssels des Servers, KservPub, an die Zustimmungsseite (43) durch den Nachweismanager (45);
- Generierung der DTBS-Werte der Anfrage und der Dokumente durch den Anfragemanager (41);
- Übermittlung der DTBS-Werte über die Einwilligungsseite (43) an den Nachweismanager (45);
- Signatur der DTBS-Werte mit dem privaten Schlüssel KPriv des Unterzeichners (30) und Hinzufügen der DTBS-Werte und der Signatur zur Beweisdatei;
- Export der Nachweisdatei im XML-Format und Rückkehr zur Einwilligungsseite (43), die sie dann an den Anfragemanager (41) übermittelt;

## Claims

1. Open and secure system for processing requests for the electronic signature of documents comprising a business application (10), responsible for creating a signature request for at least one document for a signatory user (30), said business application ( 10) being hosted by a requesting entity (40), the system is **characterized in that** it allows documents to be signed with a server certificate created on the fly and **in that** it also comprises a request manager service (41 ) who hosts signature requests and attached documents; a consent page (43), generated on the user's browser at the request of the business application (10); and an evidence manager service (45), hosted by a signature provider (50), collecting the signature proofs; the consent page (43) consisting of an HTML application, by interfacing with a secure identification service (44) of the user (30), via a new tab on the browser, generates a client key pair , Kclipub, KcliPriv, once the user is authenticated by the identity provider (44) according to the Openld Connect protocol, and when an identification token is obtained at the request of the evidence manager (45) from identity provider (44) in exchange for a code sent by said identity provider (44) to the user (30), the proof manager (45) is able to validate the identification token, to generate an evidence ID and creating an evidence file, the evidence ID being derived from the identification token such that the evidence creation cannot be replayed; said evidence manager service (45) further comprises a server component hosting the signatory's cryptographic key (30), and being able to generate a pair of server keys, KservPriv and KservPub, to derive a secret key Ks using the public key of the client, Kclipub and the private key of the server, KservPriv, to generate a public key KPub and a private key, KPriv of the signatory (30), to create a certificate request, to retrieve a certificate from a certification authority ( 46); that the secret key Ks being used to wrap the private key of the signer by returning the certificate chain and the public key of the server, KservPub to the consent page (43), said consent page using the private key of the client Kclipriv, and the public key of the server, KservPub is able to derive the secret key Ks, and that the signatory (30) is the only one to have said secret key Ks, necessary to break down his private key Kpriv via said consent page (43) which runs in its web browser, the evidence handler (45) is able to use the private key, KPriv of the signer, unzipped using the secret key ks and generated using request handler (41), to sign the DTBS value and to add the DTBS values and the signature to the evidence file to create a signature evidence to be stored; the request manager (41), after having received the proof file in XML format, is able to produce the signed documents and to inform the business application (10) of these documents, the business application (10) being able to recovering the signed documents and the XML proof file using an API key, and after having archived the XML file and the signed documents, the business application (10) being capable of transmitting the signed documents to the signatory (30 ).

2. Open and secure system for processing requests for the electronic signature of documents according to claim 1, **characterized in that** the request manager service (41) is protected by an API key so that only the business application (10 ) is able to make signature requests to it and **in that** said request manager service (41) being able to generate a request for the signature request, then to generate a unique random identifier for one or more documents of the request for signature and calculating the hash of said document(s), calculating the hash of said signature request request, creating a token of the request, with a limited lifetime, using a secret phrase, shared with the evidence manager (45), to sign said request token, then change the status of the signature request to 'started' and return the signed request token to the business application (10).

3. Open and secure system for processing requests for the electronic signature of documents according to claim 1, **characterized in that** the identification service (44) with which the consent page (43) interfaces is such that it makes it possible to obtain a substantial or reinforced identity of the user (30) and to create a qualified certificate.

4. Open and secure system for processing electronic signature requests for documents according to one of the preceding claims, **characterized in that** the consent page (43) is able to retrieve the signature request and the list of documents to be signing of the request manager (41), the consent page presenting the documents to the signer (30), allowing him to read them before signing them.

5. Open and secure system for processing requests for electronic signature of documents according to claim 1 in which the evidence file is exported in XML format, said file being signed by a security certificate and sent to the consent page ( 43) which transfers it to the request manager (41) for validation and storage of said evidence file.

6. Open and secure system for processing requests for the electronic signature of documents according to claim 1, **characterized in that** the system further comprises a native application (47) which accesses the cryptographic key of the signatory (30), said application native (47) that can run either on the signatory's computer (30) or on his smartphone, and allowing said signatory (30) to sign documents with his own certificate using either his computer or a mobile application he wants to sign on his smartphone.

7. Open and secure system for processing requests for the electronic signature of documents according to claim 1, **characterized in that**, the consent page (43) after having retrieved the documents to be signed on the request manager (41) and after having obtained the consent of the signatory (30) is able to open the native application (47) either on the desktop computer or on the smartphone of the signatory (30), said native application (47) being able to ask the signatory ( 30) to choose a signature certificate, to retrieve the DTBS of the documents to be signed on the document manager (41), to send the signed DTBS to the evidence manager (45), to request the production of the evidence file, and to transfer the evidence file to the request handler (41) to generate the signed documents asynchronously.

8. Process for generating and processing signature requests implemented in the system of claims 1 to 7, **characterized in that** it comprises the following steps:
- request token validation, generation of an evidence ID, and creation of an evidence file by the evidence manager (45), hosted by a signature provider (50), collecting the signature evidence;
- generation of a pair of customer keys KcliPriv, Kclipub by the consent page (43), said consent page (43) consisting of an HTML application by interfacing with a secure identification service (30) via a new tab on the browser and generated on the user's browser at the request of the business application (45), once the user is authenticated by the identity provider (44) according to the OpenId Connect protocol and when the identification token is obtained at the request of the evidence manager (45), from the identity provider (44) in exchange for a code sent by said identity provider (44) of the user (30) to the user (30), the evidence manager (45) validates the identification token, generates an evidence ID and creates an evidence file, the evidence ID being derived from the identification token such that the creation of evidence cannot be replayed;
- creation of the public key KPub and the private key KPriv of the signatory (30) by the evidence manager (45);
- generation by the evidence manager (45) of a pair of private and public keys of the server, KservPriv and KservPub, and the use of the private key of the server, KservPriv and the public key of the client, KcliPub to derive a key secret Ks, necessary to decompose the private key KPriv of the signatory (30) via the consent page (43), the proof manager (45) uses the private key KPriv of the signatory using the secret key Ks which wraps the private key of the signer (30);
- certificate request to the certification authority and returns the certificate chain and the public key of the server, KservPub, to the consent page (43) by the proof manager (45);
- generation of the DTBS values of the request and the documents by the request manager (41);
- transmission of the DTBS values via the consent page (43) to the evidence manager (45);
- signature of the DTBS values with the private key KPriv of the signatory (30) and addition of the DTBS values and the signature to the evidence file;
- export of the evidence file in XML format and returns to the consent page (43) which then transmits it to the request manager (41);
- production of signed documents and sends said documents to the business application (10);
- archiving of the evidence file in XML format and the documents signed by the business application (10) and then the transfer of the signed documents to the signatory (30).
